# EUROPÄISCHE PATENTSCHRIFT

(11) **EP 2 589 872 B1**
(45) Veröffentlichungstag und Bekanntmachung des Hinweises auf die Patenterteilung: **21.03.2018**
(21) Anmeldenummer: 12190796.8
(22) Anmeldetag: 31.10.2012
(51) Int. Cl.: F23R 3/00, F01D 9/02, B32B 3/12, B32B 3/26, F02C 7/00, F23M 5/04

(54) **Bauelement und Turbomaschine mit einem solchen Bauelement**
Component and turbo engine with such a component
Composant et turbomachine avec un tel composant

(30) Priorität: 04.11.2011 DE 102011085801
(43) Veröffentlichungstag der Anmeldung: 08.05.2013
(73) Patentinhaber: Rolls-Royce Deutschland Ltd & Co KG, 15827 Blankenfelde-Mahlow (DE); Fraunhofer-Gesellschaft zur Förderung der angewandten Forschung e.V., 80686 München (DE)
(72) Erfinder: Roth-Fagaraseanu, Dan, 14532 Stahnsdorf (DE); Wunderlich, Thomas, 15834 Rangsdorf (DE); Cadoret, Yannick, 78310 Maurepas (FR); Brückner, Frank, 01309 Dresden (DE); Riede, Mirko, 98617 Meiningen (DE)
(74) Vertreter: Maikowski & Ninnemann Patentanwälte Partnerschaft mbB

(56) Entgegenhaltungen:
- DE-A1- 10 057 187
- DE-A1- 10 121 019
- DE-A1- 10 357 180
- DE-A1-102005 050 873
- DE-A1-102009 011 913
- US-A- 4 594 053
- US-A- 5 080 934
- US-A- 5 866 271

## Beschreibung

Die Erfindung betrifft ein Bauelement zur Verwendung in einer Turbomaschine und eine Turbomaschine mit diesem Bauelement.

In Turbomaschinen, wie z. B. Flugzeugtriebwerken oder stationären Dampf- oder Gasturbinen, werden im Betrieb sehr hohe Arbeitstemperaturen erreicht. In modernen Flugzeugtriebwerken können z. B. bis über 2.000 K erreicht werden. Dadurch werden bestimmte Teile der Turbomaschine, wie z. B. Brennkammern oder der Eingangsbereich der Turbine in einem Flugtriebwerk, sehr hohen thermischen Belastungen unterworfen. Des Weiteren müssen diese Bauelemente zusätzlich, insbesondere beim Anlaufen einer Turbine, hohe mechanische Belastungen aushalten, da die Spitzen der Turbinenschaufeln zumindest kurzfristig in Kontakt mit der Turbinenwandung kommen.

Es ist daher bekannt, bestimmte Teile der Turbomaschine mit einer mechanisch stabilen, hitzebeständigen, mehrlagigen Schicht zu überziehen. Aus der EP 1 491 658 A1 ist eine solche mehrlagige Beschichtung bekannt. Auf eine metallische Unterlage wird eine so genannte metallische Bond-Coat-Schicht aufgebracht, auf die wiederum eine keramische Schicht aufgebracht wird. Zusammen werden diese beiden Schichten auch als Thermal Barrier Coating (TBC) bezeichnet.

Weitere Bauelemente bei denen über einer Basis des Bauelementes eine Hochtemperaturbeschichtung angeordnet ist, sind aus den Dokumenten DE 101 21 019 A1, DE 10 2005 050 873 A1, US 4 594 053 A, US 5 080 934 A und DE 100 57 187 A1 bekannt.

Aus der US 6,652,227 B2 und der US 6,457,939 B2 sind Bauelemente bekannt, bei denen das metallische Basismaterial in aufwändiger Weise selbst strukturiert ist, um eine darauf angeordnete Keramikschicht besser anhaften zu lassen.

Daher ist es sinnvoll, thermisch und mechanisch stabile Bauelemente zu entwickeln, die sicher mit einer Hochtemperaturbeschichtung verbindbar sind.

Dazu weist eine Basis eines Bauelementes mindestens ein Strukturelement zur Verbindung mit der Hochtemperaturbeschichtung auf, wobei der Querschnitt des mindestens einen Strukturelements mindestens drei unterschiedliche Breiten aufweist, nämlich eine Grundbreite am unteren Ende des mindestens einen Strukturelementes eine darüberliegende Mittenbreite und eine noch darüberliegende Spitzenbereite, wobei im Durchschnitt die Mittenbreite größer der Grundbreite, aber kleiner als der vierfachen Grundbreite, insbesondere aber kleiner gleich der dreifachen Grundbreite ist, wobei im Durchschnitt die Mittenbreite kleiner gleich der Höhe des mindestens einen Strukturelementes gemessen vom unteren Ende des mindestens einen Strukturelementes ist und im Mittel die Spitzenbreite des mindestens einen Strukturelementes kleiner ist als die Mittenbreite, und/oder an der Spitze des Strukturelementes die Flanken im Mittel unter einem Winkel zusammen laufen, der kleiner als 180°, insbesondere kleiner 120°, ganz insbesondere kleiner gleich 90° ist. Durch die Formgebung wird eine Hinterschneidung erreicht, die tief genug für eine sichere Verankerung der Hochtemperaturbeschichtung ist, aber nicht zu tief, um eine sichere Ausfüllung der Hinterschneidung zu ermöglichen.

Bei einer vorteilhaften Ausgestaltung ist im Durchschnitt die Grundbreite und die Spitzenbreite kleiner gleich der Höhe des mindestens einen Strukturelementes gemessen vom unteren Ende des mindestens einen Strukturelementes. Durch eine Höhenbegrenzung wird der Einfluss auf die Oberflächenmodifikation begrenzt.

Dadurch, dass im Durchschnitt die Spitzenbreite des mindestens einen Strukturelementes kleiner ist als die Mittenbreite, wird eine nach oben schmaler werdende Struktur erreicht. Diese hat den Vorteil, dass sie gezielt vertikale Risse in der Hochtemperaturbeschichtung erzeugen kann, was zum Spannungsabbau führen kann.

Eine weitere vorteilhafte Ausführungsform weist mindestens ein Strukturelement auf, das gemessen vom unteren Ende bis zur Spitze eine mittlere Höhe zwischen 100 und 500 µm aufweist.

Die Basis des Bauelements wird nicht über Gebühr beeinflusst, wenn das mindestens eine Strukturelement im Durchschnitt eine Grundbreite von mehr als 30 µm, und weniger als 500 µm aufweist.

Vorteilhafterweise werden die Strukturelemente zu Strukturmustern zusammengefasst. Insbesondere ist es vorteilhaft, wenn ein Strukturmuster mindestens zwei Strukturelemente aufweist, wobei sich die mindestens zwei Strukturelemente schneiden oder parallel zueinander angeordnet sind. Besonders vorteilhaft ist es, wenn das Strukturmuster die Form eines Gitters, einer Netzstruktur, einer Wabenstruktur oder eine Wellenstruktur aus parallel zueinander verlaufenden Wellen aufweist.

Eine gute Verhinderung von unerwünschten Rissen ergibt sich bei Ausführungsformen, bei denen der Abstand zwischen zwei parallelen Abschnitten zweier Strukturelemente zwischen 500 und 5000 µm liegt.

Auch ist es vorteilhaft, wenn das mindestens eine Strukturelement eine lineare Struktur oder kurvenartige Struktur mit einer mittleren Breite von 100 bis 400 µm an der breitesten Stelle (insbesondere der Mittenbreite) aufweist.

Es ist vorteilhaft, wenn an der Spitze des Strukturelementes die Flanken im Durchschnitt unter einem Winkel zusammen laufen, der kleiner als 180°, insbesondere kleiner 120°, ganz insbesondere kleiner gleich als 90° ist. Damit werden Spitzen nach oben ausgebildet, die für die Generierung vertikaler Risse 12 sinnvoll sind.

Die Aufgabe wird auch durch eine Turbomaschine, insbesondere Flugzeugtriebwerk mit den Merkmalen des Anspruchs 10 gelöst.

Dabei ist mindestens ein Bauelement nach mindestens einem der Ansprüche 1 bis 9, insbesondere in einer Brennkammer, an der Wandung der Turbine und / oder im Einlaufbereich des Hochdruckteils einer Turbine angeordnet.

In den folgenden Figuren werden verschiedene Ausführungsformen beispielhaft beschrieben, dabei zeigt
- Fig. 1:: eine schematische Darstellung eines Strukturelements zur Verbindung einer Strukturzone mit einer Hochtemperaturbeschichtung;
- Fig. 2A-D:: schematische Draufsichten auf Strukturmuster auf einem Bauelement;
- Fig. 3A-C:: Durchzeichnungen von mikroskopischen Schnittansichten mit unterschiedlichen Abständen zwischen Strukturelementen;
- Fig. 4:: eine Durchzeichnung einer mikroskopischen Schnittansicht mit einer gezielten Induzierung eines vertikalen Risses;
- Fig. 5: eine Darstellung eines Teils eines Flugzeugtriebwerkes mit einem Bauelement mit Strukturelementen.

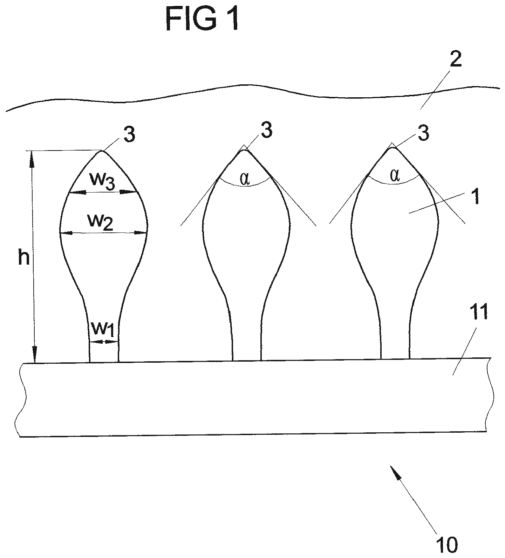

In Fig. 1 ist eine Schnittansicht durch einen Teil eines Bauelementes 10 dargestellt, das besonders dafür ausgebildet ist, in Hochtemperaturbereichen von Turbomaschinen eingesetzt zu werden.

Das Bauelement 10 selbst weist in der dargestellten Ausführungsform eine Basis 11 auf, die aus einem metallischen Werkstoff hergestellt ist. Der metallische Werkstoff weist z. B. einen Anteil an
M CrAlY mit M = Fe, Ni, und / oder Co,
M CrAl mit M = Fe, Ni, und / oder Co,
NiAl, oder NiAlPt
auf oder besteht vollständig aus den Materialien. Diese Materialien sind temperaturstabil und gut verarbeitbar.

Das mindestens eine auf der Basis 11 angeordnete Strukturelement 1 kann sowohl aus metallischem oder keramischem Werkstoff als auch aus einer Mischung aus beiden hergestellt sein. Dieses Material weist z. B. einen Anteil an
M CrAlY mit M = Fe, Ni, und / oder Co,
M CrAl mit M = Fe, Ni, und / oder Co,
NiAl, oder NiAlPt
YSZ
Aluminate
Pyrochlore
Perowskite
auf oder besteht vollständig aus den Materialien.

Oberhalb der Basis 11 ist eine Hochtemperaturbeschichtung 2 angeordnet, z.B. aus einer oxidischen Keramik, insbesondere enthaltend Yittrium, Zirkonium, Zirkoniumoxid, Magnesium-Spinell und / oder Aluminiumoxid. Ein Beispiel ist Yittrium stabilisiertes Zirkonoxid (YSZ).

Um eine sichere Verbindung der Basis 11 mit der Hochtemperaturbeschichtung 2 zu gewährleisten, weist die Basis eine Reihe von Strukturelementen 1 auf, die in besonderer Weise ausgebildet sind. In dem hier dargestellten Ausführungsbeispiel sind drei parallele, im Wesentlichen gleichförmige Strukturelemente 1 dargestellt.

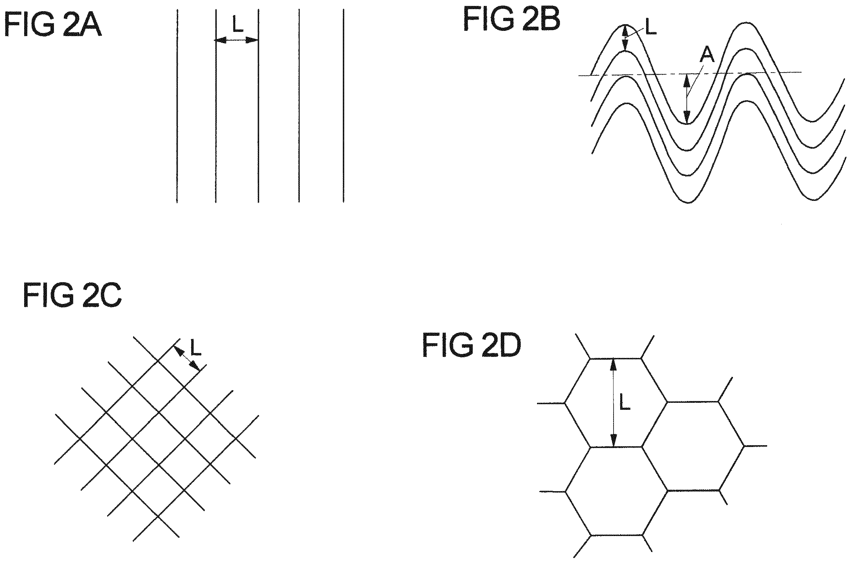

In der dargestellten Ausführungsform erstrecken sich die Strukturelemente 1 in die Zeichnungsebene hinein und sind z.B. zumindest abschnittsweise linear aufgebaut (siehe z.B. Fig. 2A). Die Strukturelemente 1 in der hier dargestellten Ausführungsform sind einstückig mit der Basis 11 ausgebildet, d.h. sie sind aus dem gleichen Material aufgebaut. In anderen Ausführungsformen können die Strukturelemente 1 auch aus einem anderen Material als die Basis 11 bestehen.

Die Strukturelemente 1 mit den Hinterschneidungen können z.B. durch ein isotropes Ätzverfahren, elektrochemisches Abtragen und / oder einem generativen Laserverfahren, wie z.B. Laserauftragschweißen hergestellt werden.

Ein mögliches Ätzverfahren für die oben genannten Materialien, bevorzugt Ni enthaltend, verwendet z.B. eine Mischung aus einer wässrigen Eisen(III)chlorid-Lösung, Salzsäure und Salpetersäure. Die Ätzung ist im kochenden Zustand auszuführen. Für Kobalt enthaltende Materialien können z.B. eine Mischung aus destilliertem Wasser und Salpetersäure, eine Mischung aus Salzsäure, Salpetersäure und Eisen(III)chlorid oder eine Mischung aus destilliertem Wasser, Salzsäure und Kupfer(II)-sulfat verwendet werden.

Wenn man beim elektrochemischen Abtragen Hinterschneidungen erhalten will, so kann dies durch einen mehrstufigen Prozess oder simultane Mehrachsnachführung erreichte werden.

Die Strukturelemente 1 weisen eine Höhe h zwischen 100 µm und 500 µm gemessen von der Basis 11 bis zur Spitze 3 auf. Der Querschnitt des Strukturelementes 1 weist mindestens drei unterschiedliche Breiten auf: Eine relativ schmale Grundbreite w₁ am Fuß des Strukturelementes 1, eine darüberliegende Mittenbreite w₂ und eine noch darüberliegende Spitzenbreite w₃.

Die Spitzenbreite w₃ liegt in vertikaler Richtung auf der Mitte zwischen der Spitze 3 des Strukturelements 1 und der Mittenbreite w₂. Die Mittenbreite w₂ gibt die breiteste Stelle des Strukturelementes 1 an.

Die Mittenbreite w₂ ist größer, oder gleich, als die Grundbreite w₁, aber kleiner als die vierfache, insbesondere die dreifache Grundbreite w₁: w₁ <= w₂ <= 3 w₁ < 4w₁.

In der dargestellten Ausführungsform ist die Spitzenbreite w₃ kleiner gleich der Mittenbreite w₂, d.h. der Querschnitt des Strukturelementes 1 läuft nach oben spitzer zu. Der Winkel α an der Spitze (d.h. der Winkel, unter dem die Flanken des Strukturelementes 1 zusammenlaufen) ist kleiner als 180°, insbesondere kleiner als 120°, ganz besonders kleiner gleich 90°. Der geöffnete Winkel α zeigt dabei in Richtung auf die Basis 11.

Wie im Folgenden noch gezeigt wird, erlauben diese Größenverhältnisse nicht nur eine besonders feste Verbindung der Hochtemperaturschicht 2 mit der Basis 11, sondern weisen noch weitere Vorteile auf.

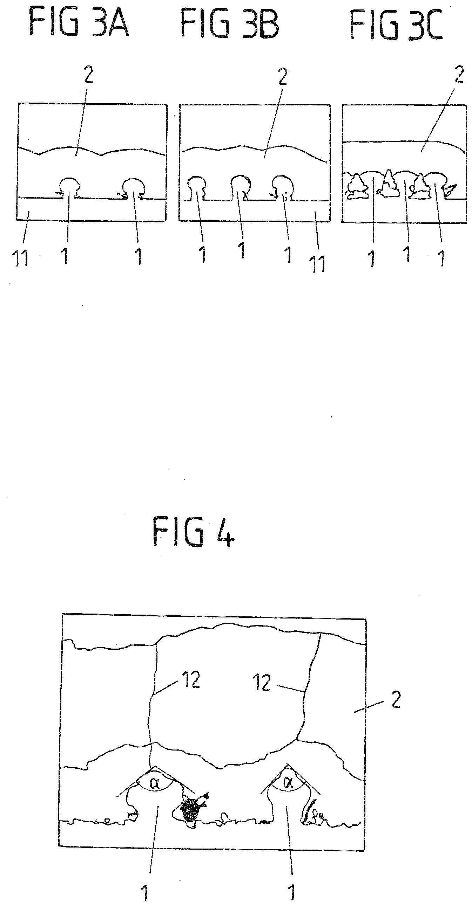

Somit weist das Strukturelement 1 unterhalb der Mittenbreite w₂ eine Hinterschneidung auf, in die das Material der Hochtemperaturbeschichtung gelangen kann (siehe Fig. 3). Durch die Hinterschneidung wird das Material der Hochtemperaturbeschichtung 2 senkrecht zur Basis 11 festgehalten. Die Bedingung w₁ < w₂ führt somit zu einer mechanischen Verklammerung von Basis 11 und Hochtemperaturbeschichtung 2.

Allerdings darf die Hinterschneidung am Strukturelement 1 nicht zu tief ausgebildet sein, da ansonsten beim Aufbringen der Hochtemperaturbeschichtung 2 Verschattungseffekte für eine ungleiche Materialansammlung im Bereich der Hinterschneidung sorgen.

Versuche haben gezeigt, dass bei einer Begrenzung der Mittenbreite w₂ auf das maximal Dreifache der Grundbreite w₁ diese Verschattungseffekte keine nennenswerte Rolle spielen. Somit hat das Verhältnis der Breiten w₁, w₂, w₃ des Strukturelements 1 für die Funktion Bedeutung.

Es hat sich ferner gezeigt, dass bestimmte andere geometrische Verhältnisse ebenfalls vorteilhafte Wirkungen haben.

Um die Beeinflussung der Basis 11 nicht zu groß werden lassen, ist es sinnvoll, eine obere Grenze für die Grundbreite w₁ einzuführen. Eine Breite von weniger als 500 µm hat sich als sinnvoll erwiesen.

Im Durchschnitt sollte die Mittenbreite w₂ und / oder die Spitzenbreite w₃ kleiner sein als die Höhe h des Strukturelementes 1. Die Maximalhöhe des Strukturelements von 500 µm stellt somit eine Obergrenze für die Breiten dar.

Ein weiterer Aspekt ist, dass in der keramischen Hochtemperaturbeschichtung 2 durch die Strukturelemente 1 gezielt vertikale Risse induziert werden, um eine mechanische Spannungsentlastung innerhalb der Hochtemperaturbeschichtung 2 zu erreichen. Diese vertikalen Risse können sich besonders effizient ausbilden, wenn sich das Strukturelement 1 nach oben hin, d.h. zur Spitze 3 verjüngt (w₃ < w₂) und in einen Winkel kleiner 180° ausläuft. In der dargestellten Ausführungsform beträgt der Winkel α an der Spitze 3 ca 90°. Aber auch bei größeren Winkeln (siehe Fig. 4) können vertikale Risse 12 induziert werden.

Diese Merkmale können in unterschiedlichen Ausführungsformen einzeln oder in Kombinationen miteinander verwendet werden.

In Fig. 4 wird eine Induzierung vertikaler Risse 12 an einer realen mikroskopischen Schnittansicht dargestellt. Die Risse 12 werden dabei durch als Spitze 3 auslaufende Strukturelemente 1 gezielt hervorgerufen.

In den Fig. 2A bis 2D werden unterschiedliche Strukturmuster 30 dargestellt, die aus Strukturelementen 1 aufgebaut sind. Die Strukturmuster 30 sollen insbesondere ein großflächiges Abplatzen der Hochtemperaturbeschichtung 2 verhindern. Auch können sich Risse in der Hochtemperaturbeschichtung 2 in horizontaler Richtung nicht beliebig weit ausdehnen. Dabei können die Strukturmuster 1 einander kreuzen oder parallel zueinander angeordnet werden.

In Fig. 2A wird ein Strukturmuster 30 aus parallelen, linearen Strukturelementen 1 dargestellt. Der Abstand L zwischen den Strukturelementen 1 beträgt dabei zwischen 500 und 5000 µm. Die Strukturmuster 30 müssen aber nicht nur lineare Strukturelemente 1 aufweisen. In Fig. 2B ist ein wellenförmiges Strukturmuster 30 aus parallel zueinander liegenden, gekrümmten Strukturelementen 1 dargestellt. Auch hier beträgt der Abstand L zwischen den Strukturelementen 1 zwischen 500 und 5000 µm. Besonders bei einer Amplitude A der Wellenstruktur, die größer als der Abstand L zwischen den Strukturelementen ist, kann eine Rissfortpflanzung wirksam unterbunden werden.

In Fig. 2C ist eine Ausführungsform dargestellt, bei der sich die Strukturelemente 1 schneiden. Es entsteht eine Gitterstruktur, wobei der Abstand L zwischen den parallelen Strukturelementen 1 zwischen 500 und 5000 µm beträgt.

In Fig. 2D ist ein wabenförmiges Strukturmuster 30 dargestellt, das aus linearen Strukturelementen 1 aufgebaut ist. Der Abstand L zwischen zwei parallelen Strukturelementen 1 beträgt zwischen 500 und 5000 µm.

Grundsätzlich ist es möglich, an einem Bauteil 10 mehrere unterschiedlich geformte Strukturelemente 1 und / oder auch unterschiedliche Strukturmuster 30 anzuordnen. So kann insbesondere der Abstand L in einem Muster variiert werden, um eine optimale Anpassung des Bauteils 10 an thermische Belastungen sicherzustellen.

In Fig. 3A bis C ist dargestellt, dass der Abstand zwischen den Strukturelementen 1 nicht zu eng gewählt werden darf, da ansonsten die keramische Masse sich nicht ausreichend um die Strukturelemente herum, insbesondere in den Hinterschneidungen einlagern kann. Die Fig.3A und Fig. 3B zeigen eine akzeptable Umschließung der Strukturelemente 1. In Fig. 3C sind die Strukturelemente 3 zu eng angeordnet, so dass die Hochtemperaturbeschichtung 2 sich nicht mehr optimal ausbilden kann.

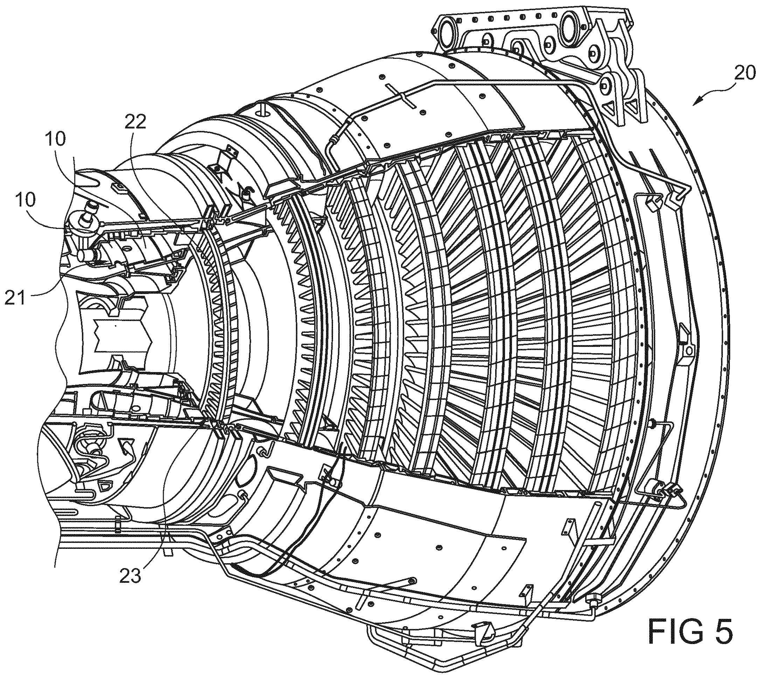

In Fig. 5 ist ausschnittsweise ein Flugzeugtriebwerk 20 dargestellt, in dem Bauelemente 10 der zuvor beschriebenen Art eingesetzt werden. Die einzelnen Ausführungsformen können dabei jeweils einzeln oder in Kombination eingesetzt werden.

Besonders hohe thermische Belastungen liegen in der Brennkammer 21 vor. Aus diesem Grund sind plattenförmige Bauelemente 10 mit der beschriebenen Beschichtung im Inneren der Brennkammer 21 angeordnet.

Die höchste Temperatur liegt beim Austritt der Gase aus der Brennkammer 21 und beim Eintritt in die Hochdruckstufe 22 der Turbine vor. Daher ist es vorteilhaft, wenn zusätzlich oder alternativ Bauelemente 10 in der Hochdruckstufe 22 angeordnet sind. Dabei sind diese Bauelemente 10 vorteilhafterweise nicht als Platten ausgebildet, sondern die Beschichtung 1 ist z.B. direkt auf im Bereich des Stators der Turbine angeordnet. Damit wird der Bereich des Stators an sich zu dem beschichteten Bauelement 10. Grundsätzlich ist es auch möglich, dass die beschichteten Bauelemente 10 noch Kanäle oder Öffnungen für Kühlmedien aufweisen.

Ferner ist es möglich, auch Schaufeln von Rotoren und / oder Statoren mit der Beschichtung zu versehen, dass diese zu Bauelementen 10 im Sinne der vorliegenden Beschreibung werden.

Eine weitere Möglichkeit besteht darin, das Bauelement 10 als Beschichtung, d.h. als so genannten Liner 23 in der Wandung der Turbinenwand zu verwenden, d.h. insbesondere den Bereichen, die den Schaufeln der Rotoren gegenüberliegen. Liner 23 können in Bereichen verwendet werden, in denen Rotorschaufeln z. B. der Turbine zumindest zeitweise mechanischen Kontakt mit der Wandung des Gehäuses haben. Dies ist für die Minimierung des Spaltes zwischen Wandung und Turbinenschaufel zumindest durchaus erwünscht. Die Bauelemente 10 mit einstückigen Strukturelementen 1 und einer keramischen Beschichtung 2 weisen nicht nur eine hohe thermische Belastbarkeit auf, sondern sind auch mechanisch so ausgebildet, dass sie als Liner 23 verwendbar sind.

Auch in Brennkammern können Liner 23 verwendet werden, oder die Beschichtung kann direkt Teil der Brennkammerwandung werden.

Grundsätzlich kann das Bauelement 10 an den Stellen eingesetzt werden, an denen üblicherweise dickere Keramikschichten angeordnet werden.

Mit den hier beschriebenen Ausführungsformen ist es möglich, eine feine Strukturierung direkt auf einem Bond-coat Material anzubringen, wobei die Höhe unter 500 µm bleibt, die metallische Basis 11 wird nicht beeinträchtigt. Im Betrieb treten nur geringe thermische Gradienten innerhalb der Strukturelemente 1 auf. Auch ist die Haftung der Schicht auf dem Basismaterial sehr gut. Diese Ausführungsformen weisen auch einen hohen Widerstand gegen Oxidation auf.

Ferner ist es möglich, ein Bauelement 10 mit bekannten chemischen und / oder mechanischen Verfahren zu reparieren und / oder zu überarbeiten.

### Bezugszeichenliste

- 1: Strukturelement
- 2: Hochtemperaturbeschichtung
- 3: Spitze des Strukturelementes

- 10: Bauelement
- 11: Basis
- 12: Vertikaler Riss

- 20: Flugzeugtriebwerk
- 21: Brennkammer
- 22: Hochdruckstufe eines Flugzeugtriebwerkes
- 23: Liner an der Wandung eines Flugzeugtriebwerkes

- 30: Strukturmuster

- α: Winkel an der Spitze des Strukturelementes
- h: Höhe des Strukturelements
- w₁: Grundbreite des Strukturelements
- w₂: Mittelbreite des Strukturelements
- w₃: Spitzenbreite des Strukturelements
- L: Abstand zwischen Strukturelementen
- A: Amplitude eines wellenförmigen Strukturelements

## Patentansprüche

1. Bauelement besonders eingerichtet und ausgebildet zur Verwendung in einer Turbomaschine, wobei über einer Basis des Bauelementes eine Hochtemperaturbeschichtung angeordnet ist, wobei die Basis (11) mindestens ein Strukturelement (1) zur Verbindung mit der Hochtemperaturbeschichtung (2) aufweist, wobei der Querschnitt des mindestens einen Strukturelements (1) mindestens drei unterschiedliche Breiten (w₁, w₂, w₃) aufweist, nämlich eine Grundbreite (w₁) am unteren Ende des mindestens einen Strukturelementes (1), eine darüberliegende Mittenbreite (w₂) und eine noch darüberliegende Spitzen bereite (w₃),
**dadurch gekennzeichnet, dass**
im Durchschnitt die Mittenbreite (w₂) größer der Grundbreite (w₁), aber kleiner als die vierfache Grundbreite (w₁), insbesondere aber kleiner gleich der dreifachen Grundbreite (w₁) ist, wobei
- im Durchschnitt die Mittenbreite (w₂) kleiner gleich der Höhe (h) des mindestens einen Strukturelementes (1) gemessen vom unteren Ende des mindestens einen Strukturelementes (1) ist und im Durchschnitt die Spitzenbreite (w₃) des mindestens einen Strukturelementes (1) kleiner ist als die Mittenbreite (w₂), und/oder
- an der Spitze (3) des Strukturelementes (1) die Flanken im Durchschnitt unter einem Winkel zusammen laufen, der kleiner als 180°, insbesondere kleiner 120°, ganz insbesondere kleiner gleich 90° ist.

2. Bauelement nach Anspruch 1, **dadurch gekennzeichnet, dass** das mindestens eine Strukturelement (1) aus metallischem und / oder keramischem Werkstoff hergestellt ist. Insbesondere weist dieses Material z. B. Anteile von
M CrAlY mit M = Fe, Ni, und / oder Co,
M CrAl mit M = Fe, Ni, und / oder Co,
NiAl, oder NiAlPt
YSZ
Aluminate
Pyrochlore
Perowskite
auf oder besteht vollständig aus den Materialien.

3. Bauelement nach Anspruch 1 und 2, **dadurch gekennzeichnet, dass** im Durchschnitt die Grundbreite (w₁) und die Spitzenbreite (w₃) kleiner gleich der Höhe (h) des mindestens einen Strukturelementes (1) gemessen vom unteren Ende des mindestens einen Strukturelementes (1) ist.

4. Bauelement nach mindestens einem der vorhergehenden Ansprüche, **dadurch gekennzeichnet, dass** das mindestens eine Strukturelement (1) gemessen vom unteren Ende bis zur Spitze eine mittlere Höhe zwischen 100 und 500 µm aufweist.

5. Bauelement nach mindestens einem der vorhergehenden Ansprüche, **dadurch** h **gekennzeichnet**, dass das mindestens eine Strukturelement (1) im Durchschnitt eine Grundbreite (w₁) von mehr als 30 µm, insbesondere mehr als 50 µm und weniger als 500 µm aufweist.

6. Bauelement nach mindestens einem der vorhergehenden Ansprüche, **gekennzeichnet durch** eine Zusammenfassung von mindestens zwei Strukturelementen (1) zu einem Strukturmuster (30), insbesondere ein Strukturmuster (30) mit mindestens zwei Strukturelementen (1), wobei sich die mindestens zwei Strukturelemente (1) schneiden oder parallel zueinander angeordnet sind.

7. Bauelement nach Anspruch 6, **dadurch gekennzeichnet, dass** das Strukturmuster (30) die Form eines Gitters, einer Netzstruktur, einer Wabenstruktur oder einer Wellenstruktur aus parallel zueinander verlaufenden Wellen aufweist.

8. Bauelement nach Anspruch 6 oder 7, **dadurch gekennzeichnet, dass** der Abstand (L) zwischen zwei parallelen Abschnitten zweier Strukturelemente (1) zwischen 500 und 5000 µm liegt.

9. Bauelement nach mindestens einem der vorhergehenden Ansprüche, **dadurch gekennzeichnet, dass** das mindestens eine Strukturelement (1) eine lineare Struktur oder kurvenartige Struktur mit einer mittleren Breite von 100 bis 400 µm an der breitesten Stelle, insbesondere der Mittenbreite (w₂) aufweist.

10. Turbomaschine, insbesondere Flugzeugtriebwerk,
**gekennzeichnet durch**
mindestens ein Bauelement (10) nach mindestens einem der vorhergehenden Ansprüche, wobei das mindestens eine Bauelement (10) insbesondere in einer Brennkammer (21), an der Wandung der Turbine und / oder im Einlaufbereich des Hochdruckteils (22) einer Turbine (20) angeordnet ist.

## Claims

1. Component, especially contrived and designed for being used in a turbomachine, wherein a high-temperature coating is arranged above a base of the component, wherein the base (11) has at least one structural element (1) for connecting it to the high-temperature coating (2), wherein the cross-section of the at least one structural element (1) has at least three different widths (w₁, w₂, w₃), i.e. a base width (w₁) at the lower end of the at least one structural element (1), a center width (w₂) above it, and a tip width (w₃) above that,
**characterized in that**
on average the center width (w₂) is greater than the base width (w₁), but less than four times the base width (w₁), in particular however less than or equal to three times the base width (w₁), wherein
- on average the center width (w₂) is less than or equal to the height (h) of the at least one structural element (1), measured from the lower end of the at least one structural element (1), and on average the tip width (w₃) of the at least one structural element (1) is less than the center width (w₂), and/ or
- at the tip (3) of the structural element (1) the flanks converge on average at an angle less than 180°, particularly less than 120°, and very particularly less than or equal to 90°.

2. Component in accordance with Claim 1, **characterized in that** the at least one structural element (1) is made from metallic and/ or ceramic material. In particular, this material has for example proportions of
M CrAlY with M = Fe, Ni and/ or Co,
M CrAl with M = Fe, Ni and/ or Co,
NiAl or NiAlPt,
YSZ,
aluminate,
pyrochlore,
perovskite,
or is completely made from these materials.

3. Component in accordance with Claims 1 and 2, **characterized in that** on average the base width (w₁) and the tip width (w₃) are less than or equal to the height (h) of the at least one structural element (1), measured from the lower end of the at least one structural element (1).

4. Component in accordance with at least one of the preceding Claims, **characterized in that** the at least one structural element (1) has a mean height between 100 µm and 500 µm measured from the lower end to the tip.

5. Component in accordance with at least one of the preceding Claims, **characterized in that** the at least one structural element (1) has on average a base width (w₁) of more than 30 µm, in particular more than 50 µm and less than 500 µm.

6. Component in accordance with at least one of the preceding Claims, **characterized by** combining at least two structural elements (1) to a structure pattern (30), in particular to a structure pattern (30) with at least two structural elements (1), where the at least two structural elements (1) intersect or are arranged parallel to one another.

7. Component in accordance with Claim 6, **characterized in that** the structure pattern (30) has the shape of a grid, a net structure, a honeycomb structure or a wavy structure of waves running parallel to one another.

8. Component in accordance with Claim 6 or 7, **characterized in that** the distance (L) between two parallel sections of two structural elements (1) is between 500 and 5000 µm.

9. Component in accordance with at least one of the preceding Claims, **characterized in that** the at least one structural element (1) has a linear structure or a curve-like structure with a mean width of 100 to 400 µm at the widest point, in particular the center width (w₂).

10. Turbomachine, in particular an aircraft engine,
**characterized by**
at least one component (10) in accordance with at least one of the preceding Claims, wherein the at least one component (10) is arranged in particular in a combustion chamber (21), on the wall of the turbine and/ or in the inlet area of the high-pressure part (22) of a turbine (20).

## Revendications

1. Composant particulièrement configuré et conçu pour être utilisé dans une turbomachine, dans lequel un revêtement haute température est disposé au-dessus d'une base du composant, dans lequel la base (11) présente au moins un élément structural (1) servant à la liaison avec le revêtement haute température (2), dans lequel la section transversale de l'au moins un élément structural (1) présente au moins trois largeurs différentes (w₁, w₂, w₃), notamment une largeur de base (w₁) sur l'extrémité inférieure de l'au moins un élément structural (1), une largeur centrale située au-dessus (w₂) et une largeur de pointe (w₃) encore au-dessus,
**caractérisé en ce**
**qu'**en moyenne, la largeur centrale (w₂) est supérieure à la largeur de base (w₁), mais inférieure à la largeur de base (w₁) multipliée par quatre, en particulier inférieure ou égale à la largeur de base (w₁) multipliée par trois, dans lequel
- en moyenne, la largeur centrale (w₂) est inférieure ou égale à la hauteur (h) de l'au moins un élément structural (1), mesurée en partant de l'extrémité inférieure de l'au moins un élément structural (1) et en moyenne, la largeur de pointe (w₃) de l'au moins un élément structural (1) est inférieure à la largeur centrale (w₂) et/ ou
- à la pointe (3) de l'élément structural (1), les flancs se rejoignent en moyenne selon un angle inférieur à 180°, notamment inférieur à 120° et tout particulièrement inférieur ou égal à 90°.

2. Composant selon la revendication n° 1, **caractérisé en ce que** ledit au moins un élément structural (1) est constitué d'un matériau métallique et/ ou céramique. Ce matériau présente notamment par exemple des portions de
M CrAlY avec M = Fe, Ni et/ ou Co,
M CrAl avec M = Fe, Ni et/ ou Co,
NiAl ou NiAlPt,
YSZ,
aluminate,
pyrochlore,
perovskite,
ou est constitué entièrement de ces matériaux.

3. Composant selon la revendication n° 1 et n° 2, **caractérisé en ce qu'**en moyenne, la largeur de base (w₁) et la largeur de pointe (w₃) sont inférieures ou égales à la hauteur (h) de l'au moins un élément structural (1), mesurée en partant de l'extrémité inférieure de l'au moins un élément structural (1).

4. Composant selon au moins l'une des revendications précédentes, **caractérisé en ce que** ledit au moins un élément structural (1) présente une hauteur moyenne comprise entre 100 et 500 µm, mesurée de l'extrémité inférieure à la pointe.

5. Composant selon au moins l'une des revendications précédentes, **caractérisé en ce que** ledit au moins un élément structural (1) présente en moyenne une largeur de base (w₁) supérieure à 30 µm, notamment supérieure à 50 µm et inférieure à 500 µm.

6. Composant selon au moins l'une des revendications précédentes, **caractérisé par** une combinaison d'au moins deux éléments structuraux (1) pour former un motif structural (30), notamment un motif structural (30) avec au moins deux éléments structuraux (1), dans lequel lesdits au moins deux éléments structuraux (1) s'entrecoupent ou sont disposés parallèles l'un par rapport à l'autre.

7. Composant selon la revendication n° 6, **caractérisé en ce que** le motif structural (30) présente la forme d'un grillage, d'un maillage, d'une structure en nids d'abeilles ou d'une structure ondulée composée d'ondulations parallèles les unes par rapport aux autres.

8. Composant selon la revendication n° 6 ou n° 7, **caractérisé en ce que** la distance (L) entre deux portions parallèles de deux éléments structuraux (1) est comprise entre 500 et 5 000 µm.

9. Composant selon au moins l'une des revendications précédentes, **caractérisé en ce que** ledit au moins un élément structural (1) présente une structure linéaire ou incurvée avec une largeur moyenne de 100 à 400 µm à l'endroit le plus large, notamment à la largeur centrale (w₂).

10. Turbomachine, en particulier moteur d'avion,
**caractérisé par**
au moins un composant (10) selon au moins l'une des revendications précédentes, dans lequel ledit au moins un composant (10) est disposé en particulier dans une chambre de combustion (21), sur la paroi de la turbine et/ ou dans la zone d'entrée de la partie haute pression (22) d'une turbine (20).
